# EUROPEAN PATENT SPECIFICATION

(11) **EP 1 238 897 B1**
(45) Date of publication and mention of the grant of the patent: **17.01.2007**
(21) Application number: 02075603.7
(22) Date of filing: 14.02.2002
(51) Int. Cl.: B62D 55/084

(54) **Crawler vehicle with oscillating track carriages**
Raupenfahrzeug mit oszillierenden Gleiskettenlaufwerken
Véhicule à chenilles avec chariots de chenilles oscillantes

(30) Priority: 09.03.2001 IT TO010216
(43) Date of publication of application: 11.09.2002
(73) Proprietor: CNH Italia S.p.A., 41100 Modena (IT)
(72) Inventor: Castrignanò, Gianfranco, 73100 Lecce (IT)
(74) Representative: Vandenbroucke, Alberic

(56) References cited:
- US-A- 2 988 159
- US-A- 3 687 226
- US-A- 3 825 088
- US-A- 4 364 443
- US-A- 4 483 406
- US-A- 5 358 064

## Description

The present invention relates to a crawler vehicle with oscillating track carriages, which is normally used as an earth-moving machine, in particular as a bulldozer. More specifically, the present invention relates to a vehicle having a longitudinal axis, a supporting frame, and two longitudinal carriages located on opposite sides of the frame. The carriages support respective tracks for driving the vehicle, and are connected to the frame by respective rear pivots to rotate about a rear transverse axis and in a substantially vertical oscillating plane in dependence of the roughness of the ground over which the vehicle travels.

In vehicles of the type described above, the front end of each carriage commonly is connected to the frame by a vertical guide for guiding the movement of the carriage in the oscillating plane.

Given the rough conditions, particularly in terms of dust and mud, in which known crawler vehicles of the above type operate, the guides connecting the front ends of the carriages are subjected to severe wear and damage, and therefore call for continual maintenance and frequent replacement.

In an alternative solution, the front ends of the carriages are connected to each other by a front cross member, a central portion of which is hinged to the vehicle frame to rotate about a hinge axis parallel to the longitudinal axis. More specifically, each end of the cross member is hinged to the respective carriage by a cylindrical hinge pin perpendicular to the rear transverse axis.

This solution is also unsatisfactory on account of the severe and potentially dangerous bending and/or torsional stress to which the carriages, rear hinges and front hinge pins are subjected when operating over rough ground causing one carriage to rotate upwards and the other downwards in their respective oscillating planes.

In fact, as the carriages rotate increasingly in opposite directions about the rear transverse axis, the distance between the front ends of the carriages increases, whereas the front ends remain connected substantially rigidly to each other by the cross member, which thus generates stress and consequently strain on the carriages and, indirectly, on the rear hinges.

This problem is partially solved in US-A-2.988.159 by providing an equalizer member having a cylindrical shaft end slideably received by a pivot pin. This solution however does not allow the cross member to be securely mounted to the carriage.

It is therefore an object of the present invention to provide a crawler vehicle with oscillating track carriages, designed to provide a straightforward, low-cost solution to the aforementioned drawbacks.

According to the present invention, there is provided a crawler vehicle having :
- a longitudinal axis;
- a frame extending along said longitudinal axis;
- two track carriages on opposite sides of said frame;
- first connecting means interposed between each said carriage and said frame to permit oscillation of each said carriage, with respect to said frame, about at least a first hinge axis perpendicular to said longitudinal axis;
- a connecting cross member substantially parallel to said first hinge axis;
- second connecting means interposed between said cross member and each said carriage to permit relative oscillation of said cross member and the carriage about a second hinge axis perpendicular to said first hinge axis; and
- compensating means for varying the length of said cross member between two given values as said carriages oscillate about said first hinge axis; said compensating means comprising, for each said carriage, a cylindrical body connected to one of said cross member and said carriage so as to rotate about the relative said second hinge axis.

Such a crawler vehicle is known from US-A- 2 988 159.

According to the invention, the crawler vehicle is characterized in that said compensating means further comprises an eccentric portion; connecting means being provided to connect said eccentric portion to the other of said cross member and said carriage.

A non-limiting embodiment of the invention will now be described by way of example, with reference to the accompanying drawings, in which:
Figure 1 shows a plan view, with parts removed for clarity, of a preferred embodiment of the crawler vehicle with oscillating track carriages according to the present invention;
Figure 2 shows a larger-scale, schematic front view of a detail of the Figure 1 crawler vehicle in different operating positions;
Figure 3 shows a section along line III-III in Figure 2;
Figures 4 and 5 show larger-scale sections, along respective lines IV-IV and V-V in Figure 2, of the Figure 2 detail in two respective operating positions;
Figure 6 shows a partial side view of a variation of the crawler vehicle in the above drawings, and a track carriage in two different operating positions.

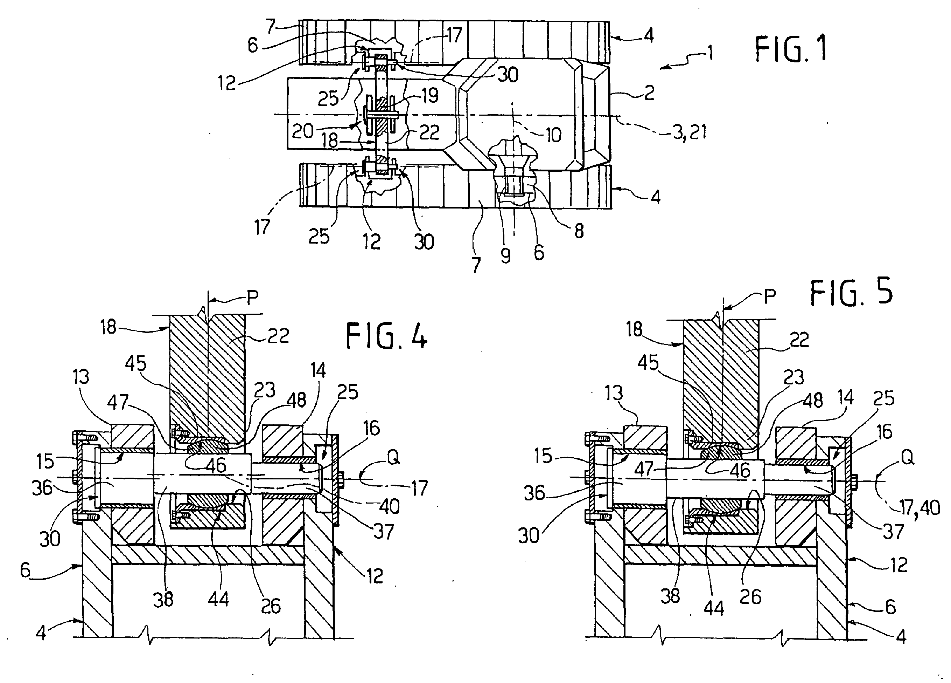

Reference number 1 in Figure 1 indicates a crawler vehicle normally used as an earth-moving machine and, in particular, as a bulldozer. Vehicle 1 has a longitudinal central axis 3, and comprises a supporting frame 2 extending in the direction 3. Vehicle 1 further comprises two track carriages 4 located on opposite sides of frame 2 and extending in directions substantially parallel to the axis 3.

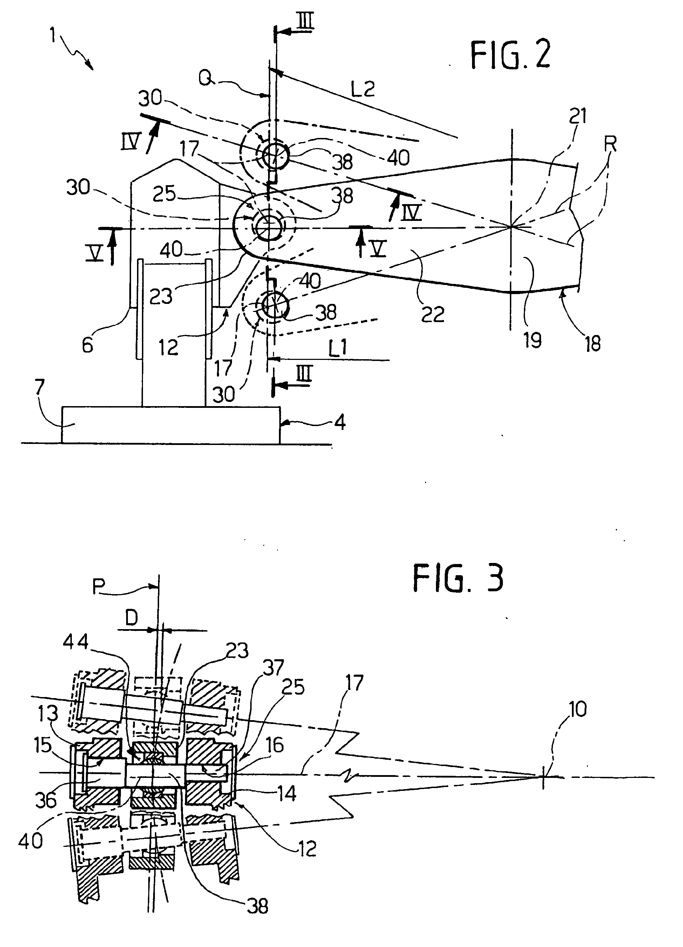

With reference to Figures 1 and 2, each carriage 4 comprises a supporting structure 6 and a track 7, which is supported by and runs along the periphery of structure 6. Each track 7 is powered in known manner (not shown) to propel vehicle 1. Structures 6 comprise respective rear portions 8 connected to frame 2 by respective connecting assemblies 9 (not described in detail, and only one of which is shown in Figure 1) enabling carriages 4 to oscillate, with respect to frame 2, about a horizontal hinge axis 10 perpendicular to direction 3, and on opposite sides of an intermediate reference position in which the carriages 4 are parallel to each other. Assemblies 9 allow a certain radial and axial clearance in the connection of rear portions 8 to frame 2.

With reference to Figures 1 to 5, structures 6 also comprise respective front connecting forks 12, each of which comprises two arms 13, 14 facing frame 2 and defining respective cylindrical seats 15, 16 formed along a relative axis 17 perpendicular to axis 10.

Structures 6 are connected to each other and supported by a front suspension defined by a cross member 18, which is substantially parallel to axis 10 and, in turn, comprises a central portion 19 connected to frame 2 by a known hinge device 20 (Figure 1) to allow cross member 18 to oscillate about a central axis 21 parallel to direction 3, and in a vertical plane P perpendicular to axis 21 (Figure 3) and coincident with the Figure 2 plane.

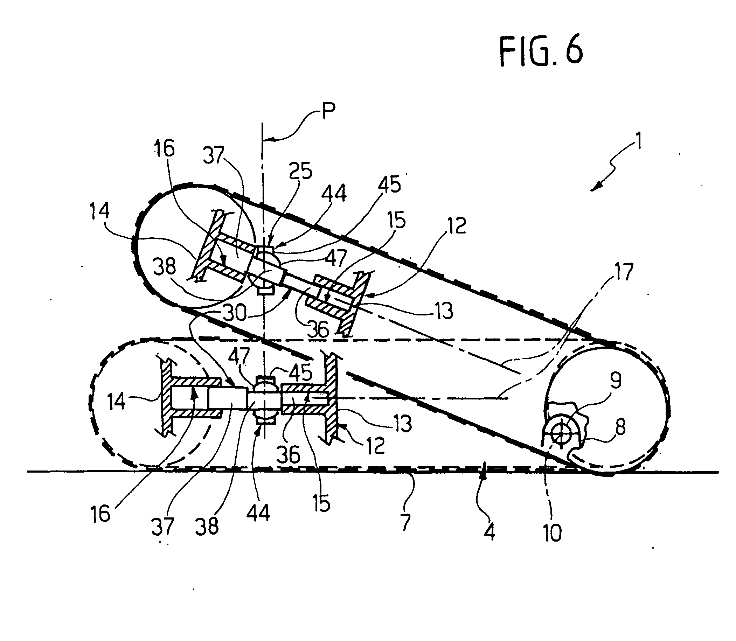

Cross member 18 comprises two opposite arms 22, each terminating with a portion 23, which is interposed between arms 13, 14 of a respective fork 12 and is connected to fork 12 by a connecting assembly 25 comprising seats 15, 16, a longitudinal seat 26 formed through portion 23 (Figures 4 and 5), and a hinge pin 30 engaging seats 15, 26 and 16.

With particular reference to Figures 3 to 5, pin 30 comprises two coaxial, opposite cylindrical end portions 36, 37, which engage respective seats 15 and 16 along axis 17 in axially-fixed, rotary manner to permit relative oscillation of cross member 18 and each carriage 4. Pin 30 further comprises a cylindrical intermediate portion 38, which extends between portions 36 and 37 along a respective axis 40 parallel to and offset with respect to axis 17. Portion 38 has a diameter between those of portions 36, 37, and has two diametrically opposite generating lines defining extensions of a respective upper generating line of portion 36 and a lower generating line of portion 37, with respect to the view of Figure 4.

Portion 38 engages seat 26 and is connected to portion 23 by the interposition of an articulated or spherical joint 44 forming part of assembly 25 and comprising an outer ring 45 connected integrally to portion 23 and defining a spherical seat 46; and an inner ring 47, connected to portion 38, which is able to slide axially in opposite directions (Figure 3) and comprising a spherical head 48 engaging seat 46.

With reference to Figures 1 to 5, in actual use, the position of carriages 4 with respect to frame 2 adapts automatically in dependence of the roughness of the terrain. When vehicle 1 travels over flat ground, carriages 4 remain in the intermediate reference position (Figure 5 and the parts shown by the continuous lines in Figure 2), and each pin 30 is set to a first operating position in which respective axes 17 and 40 are parallel to axis 21 and lie in a plane Q perpendicular to axis 10 and parallel to the oscillating planes of carriages 4. Conversely, when vehicle 1 travels through a dip or over a bump, carriages 4 rotate in opposite directions about axis 10, so that cross member 18 rocks about axis 21 in plane P. As carriages 4 and cross member 18 oscillate, axes 17 are retained by structures 6 to rotate about axis 10 in respective planes Q, while axes 40 are retained by cross member 18 and articulated joints 44 to rotate about axis 21. As a result of the difference between the trajectories of axes 17 and 40 in plane P, each pin 30 rotates in seats 15, 16 about respective axis 17 automatically so as to vary the length of cross member 18, i.e. the distance between axes 17.

Each pin 30 is free to rotate from the first operating position (Figures 2 and 5), in which cross member 18 is of a length of value L1 (Figure 2), to a second limit operating position (Figures 2 and 4), in which axes 17, 40 intersect the same line R, radial with respect to axis 21, and the length of cross member 18 takes up a value L2 greater than L1. More specifically, the difference between values L1 and L2 equals twice the eccentricity of portion 38.

At the same time, each articulated joint 44 adapts the tilt of respective pin 30 to that of cross member 18, while the sliding connection of inner ring 47 to portion 38 provides for guiding pin 30 axially and compensating for the difference D between the trajectories travelled by fork 12 and portion 23 along axis 17 (Figure 3) as a carriage 4 oscillates.

Figure 6 shows, schematically, a variation of assembly 25, in which inner ring 47 is connected integrally to portion 38 of the guiding pin 30, while arms 13, 14 define respective guiding seats 15, 16 along axis 17, and portions 36, 37 define respective slides connected in axially-sliding manner to arms 13, 14. As will be appreciated from Figure 6, the outer ring 45 connected integrally to the cross member 18 is enabled to remain in the plane P during pivotal movement of a carriage 4 around axis 10 by virtue of the sliding movement of the pin 30 inside the seats 15, 16.

At the same time, the clearance between structures 6 and frame 2 allowed by rear connecting assemblies 9, together with pins 30, enables each carriage 4 to also oscillate about any axis crosswise to axis 10, and to adapt its lateral position, parallel to axis 10, by relatively small movements, but sufficient to further improve the ability of carriage 4 to adapt to the roughness of the terrain over which vehicle 1 travels.

The position of carriages 4 with respect to frame 2 can therefore be adapted according to the roughness of the terrain without generating severe stress or strain on structures 6 or assemblies 9, 25. Assemblies 25, in fact, enable each carriage 4 to adapt its position with respect to cross member 18 in practically any direction in space. Such adaptation happens in a controlled, as opposed to random, manner, by means of articulated joint 44 and, in particular, by pin 30, the position of which is variable between two limit operating positions determined by the eccentricity of portion 38.

Assembly 25 is also reliable in design, since the connection between forks 12 and pin 30 is protected in a relatively straightforward manner against external agents, such as dust.

Moreover, by virtue of its shape, pin 30 can be assembled relatively easily in one operation, by inserting it axially inside seat 15, through inner ring 47, and into seat 16.

Clearly, changes may be made to the crawler vehicle as described and illustrated herein without, however, departing from the scope of the present invention.

In particular, compensating devices other than pins 30 may be provided to vary the length of cross member 18, and/or connecting assemblies other than articulated joint 44 may be interposed between portion 38 and end portion 23.

Moreover, articulated joint 44 may be carried by structure 6 as opposed to cross member 18, and pin 30 may be carried by a fork integral with cross member 18.

## Claims

1. A crawler vehicle (1) having :
- a longitudinal axis (3);
- a frame (2) extending along said longitudinal axis (3);
- two track carriages (4) on opposite sides of said frame (2);
- first connecting means (9) interposed between each said carriage (4) and said frame (2) to permit oscillation of each said carriage (4), with respect to said frame (2), about at least a first hinge axis (10) perpendicular to said longitudinal axis (3) ;
- a connecting cross member (18) substantially parallel to said first hinge axis (10);
- second connecting means (25) interposed between said cross member (18) and each said carriage (4) to permit relative oscillation of said cross member (18) and the carriage (4) about a second hinge axis (17) perpendicular to said first hinge axis (10); and
- compensating means (30) for varying the length of said cross member (18) between two given values (L1, L2) as said carriages (4) oscillate about said first hinge axis (10); said compensating means (30) comprising, for each said carriage (4), a cylindrical body (30) connected to one (4) of said cross member (18) and said carriage (4) so as to rotate about the relative said second hinge axis (17),
**characterized in that** said compensating means (30) further comprises an eccentric portion (38), connecting means (44) being provided to connect said eccentric portion (38) to the other (18) of said cross member (18) and said carriage (4).

2. A vehicle according to claim 1, **characterized in that** said compensating means (30) form part of said second connecting means (25).

3. A vehicle according to claim 1 or 2, **characterized in that** said connecting means (44) comprise a spherical joint (44).

4. A vehicle according to claim 3, **characterized in that** each said spherical joint (44) comprises a spherical head (48) carried by an associated eccentric portion (38) ; and a spherical seat (46) engaged by said spherical head (48) and carried by said cross member (18).

5. A vehicle according to claim 4, **characterized in that** each said cylindrical body (30) is connected to the relative said carriage (4) in a fixed axial position along said second hinge axis (17); and **in that** each said spherical head (48) is connected to the relative said eccentric portion (38) in a manner to slide in opposite directions along the second hinge axis (17).

6. A vehicle according to claim 4, **characterized in that** each said spherical head (48) is connected integrally to said eccentric portion (38); and **in that** each said cylindrical body (30) comprises slide means (36, 37) associated with guide means (15, 16) carried by the relative said carriage (4) and permitting relative axial translation in opposite directions of said eccentric portion (38) along said second hinge axis (17).

7. A vehicle according to any of the preceding claims, **characterized in that** each said cylindrical body (30) comprises two coaxial cylindrical end portions (36, 37) on opposite axial sides of said eccentric portion (38).

8. A vehicle according to claim 7, **characterized in that** the diameters of said two coaxial cylindrical end portions (36, 37) are different.

9. A vehicle according to claim 8, **characterized in that** said eccentric portion (38) has a diameter between those of said cylindrical end portions (36, 37).

10. A vehicle according to claim 9, **characterized in that** the axial projection of said eccentric portion (38) along said second hinge axis (17) is fully circumscribed by the axial projection of the one of the cylindrical end portions (36, 37) having the largest diameter, facilitating mounting of the cylindrical body (30) in associated seats (15, 16).

11. A vehicle according to any of the preceding claims, **characterized in that** said first connecting means (9) allow each said carriage (4) to oscillate, with respect to said frame (2), about at least one axis crosswise to said first hinge axis (10).

12. A vehicle according to any of the preceding claims, **characterized in that** the difference between said two given values (L1, L2) equals twice the eccentricity of said eccentric portion (38).

13. A vehicle according to any of the preceding claims, **characterized in that** the compensating means (30) are operable to compensate for any difference in trajectory between the track carriages (4) and the connecting cross member (18) in three orthogonal planes upon said carriages (4) oscillating about said first hinge axis (10).

## Patentansprüche

1. - Raupenfahrzeug (1) mit:
- einer längsgerichteten Achse (3);
- einem Rahmen (2), der sich entlang der längsgerichteten Achse (3) erstreckt;
- zwei Gleiskettenlaufwerken (4) auf entgegengesetzten Seiten des Rahmens (2);
- ersten Verbindungseinrichtungen (9), die zwischen jedem der Laufwerke (4) und dem Rahmen (2) eingefügt sind, um ein Schwingen jedes Laufwerks (4) gegenüber dem Rahmen (2) um zumindest eine feste Gelenkachse (10) senkrecht zu der längsgerichteten Achse (3) zu ermöglichen;
- einem Verbindungs-Querbauteil (18), das sich im Wesentlichen parallel zu der ersten Gelenkachse (10) erstreckt;
- zweiten Verbindungseinrichtungen (25), die zwischen dem Querbauteil (18) und jedem der Laufwerke (4) eingefügt sind, um eine relative Schwingung des Querbauteils (18) und des Laufwerks (4) um eine zweite Gelenkachse (17) senkrecht zu der ersten Gelenkachse (10) zu ermöglichen; und
- Kompensationseinrichtungen (30) zur Änderung der Länge des Querbauteils (18) zwischen zwei vorgegebenen Werten (L1, L2), während die Laufwerke (4) um die erste Gelenkachse (10) schwingen; wobei die Kompensationseinrichtungen (30) für jedes der Laufwerke (4) einen zylindrischen Körper (30) umfassen, der mit dem einen (4) von dem Querbauteil (18) und dem Laufwerk (4) verbunden ist, um sich gegenüber der zweiten Gelenkachse (17) zu drehen,
**dadurch gekennzeichnet, dass** die Kompensationseinrichtung (30) weiterhin einen exzentrischen Teil (38) umfasst, wobei Verbindungseinrichtungen (44) vorgesehen sind, um den exzentrischen Teil (38) mit dem anderen (18) von dem Querbauteil (18) und dem Laufwerk (4) zu verbinden.

2. Fahrzeug nach Anspruch 1, **dadurch gekennzeichnet, dass** die Kompensationseinrichtungen (30) einen Teil der zweiten Verbindungseinrichtung (25) bilden.

3. Fahrzeug nach Anspruch 1 oder 2, **dadurch gekennzeichnet, dass** die Verbindungseinrichtungen (44) ein Kugelgelenk (44) umfassen.

4. Fahrzeug nach Anspruch 3, **dadurch gekennzeichnet, dass** jedes Kugelgelenk (44) einen kugelförmigen Kopf (48), der von einem zugehörigen exzentrischen Teil (38) getragen wird, und eine kugelförmigen Sitz (46) umfasst, der mit dem kugelförmigen Kopf (48) in Eingriff steht und von dem Querbauteil (18) getragen wird.

5. Fahrzeug nach Anspruch 4, **dadurch gekennzeichnet, dass** jeder zylindrische Körper (30) mit dem betreffenden Laufwerk (4) in einer festen axialen Position entlang der zweiten Gelenkachse (17) verbunden ist; und das jeder kugelförmige Kopf (48) mit dem betreffenden exzentrischen Teil (38) in einer Weise verbunden ist, dass er in entgegengesetzten Richtungen entlang der zweiten Gelenkachse (17) gleitet.

6. Fahrzeug nach Anspruch 4, **dadurch gekennzeichnet, dass** jeder kugelförmige Kopf (48) einstückig mit dem exzentrischen Teil (38) verbunden ist; und das jeder zylindrische Körper (30) Gleiteinrichtungen (36, 37) umfasst, die Führungseinrichtungen (15, 16) zugeordnet sind, die von dem betreffenden Laufwerk (4) getragen werden und eine relative axiale Translationsbewegung in entgegengesetzten Richtungen des exzentrischen Teils (38) entlang der zweiten Gelenkachse (17) ermöglichen.

7. Fahrzeug nach einem der vorhergehenden Ansprüche, **dadurch gekennzeichnet, dass** jeder zylindrische Körper (30) zwei koaxiale zylindrische Endteile (36, 37) auf entgegengesetzten axialen Seiten des exzentrischen Teils (38) umfasst.

8. Fahrzeug nach Anspruch 7, **dadurch gekennzeichnet, dass** die Durchmesser der zwei koaxialen zylindrischen Endteile (36, 37) unterschiedlich sind.

9. Fahrzeug nach Anspruch 8. **dadurch gekennzeichnet, dass** der exzentrische Teil (38) einen Durchmesser zwischen denen der zylindrischen Endteile (36, 37) aufweist.

10. Fahrzeug nach Anspruch 9, **dadurch gekennzeichnet, dass** der axiale Vorsprung des exzentrischen Teils (38) entlang der zweiten Gelenkachse (17) vollständig durch den axialen Vorsprung eines der zylindrischen Endteile (36, 37) umschrieben ist, der den größten Durchmesser aufweist, wodurch die Befestigung des zylindrischen Körpers (30) in zugehörigen Sitzen (15, 16) erleichtert ist.

11. Fahrzeug nach einem der vorhergehenden Ansprüche, **dadurch gekennzeichnet, dass** die ersten Verbindungseinrichtungen (9) es jedem Laufwerk (4) ermöglichen, gegenüber dem Rahmen (2) um zumindest eine Achse quer zu der ersten Gelenkachse (10) zu schwingen.

12. Fahrzeug nach einem der vorhergehenden Ansprüche, **dadurch gekennzeichnet, dass** die Differenz zwischen den zwei vorgegebenen Werten (L1, L2) gleiche dem doppelten der Exzentrizität des exzentrischen Teils (38) ist.

13. Fahrzeug nach einem der vorhergehenden Ansprüche, **dadurch gekennzeichnet, dass** die Kompensationseinrichtungen (30) zur Kompensation irgendeiner Differenz der Bewegungsbahn zwischen den Gleiskettenlaufwerken (4) und dem Verbindungs-Querbauteil (18) in drei orthogonalen Ebenen betreibbar sind, wenn die Laufwerke (4) um die erste Gelenkachse (10) schwingen.

## Revendications

1. Véhicule à chenilles (1) constitué des éléments suivants :
- un axe longitudinal (3) ;
- une ossature (2) qui s'étend le long dudit axe longitudinal (3) ;
- deux coussinets (4) disposés des deux côtés opposés de ladite ossature (2) ;
- un premier moyen de raccordement (9) interposé entre chaque coussinet (4) et ladite ossature (2) pour permettre l'oscillation de chaque coussinet (4) en question par rapport à ladite ossature (2) autour d'au moins un premier axe d'articulation (10) perpendiculaire audit axe longitudinal (3) ;
- une traverse de raccordement (18) fondamentalement parallèle audit premier axe d'articulation (10) ;
- un second moyen de raccordement (25) interposé entre ladite traverse (18) et chaque coussinet (4) en question pour permettre une oscillation relative de ladite traverse (18) et dudit coussinet (4) autour d'un second axe d'articulation (17) perpendiculaire au premier axe d'articulation (10) ; et
- un moyen de compensation (30) permettant de faire varier la longueur de ladite traverse (18) entre deux valeurs données (L1, L2) tandis que lesdits coussinets (4) oscillent autour dudit premier axe d'articulation (10) ; ledit moyen de compensation (30) comprenant, pour chaque coussinet (4), un corps cylindrique (30) relié à l'une (4) desdites traverses (18) et audit coussinet (4), afin de tourner autour du second axe relatif d'articulation en question (17),
**caractérisé en ce que** ledit moyen de compensation (30) comprend également une partie excentrée (38), le moyen de (44) raccordement étant destiné à relier ladite partie excentrée (38) à l'autre traverse (18) et à l'autre coussinet (4) en question.

2. Véhicule selon la revendication 1, **caractérisé en ce que** ledit moyen de compensation (30) fait partie du deuxième moyen de raccordement (25).

3. Véhicule selon la revendication 1 ou 2, **caractérisé en ce que** ledit moyen de raccordement (44) comporte un joint sphérique (44).

4. Véhicule selon la revendication 3, **caractérisé en ce que** chaque joint sphérique (44) en question comporte une tête sphérique (48) supportée par une partie excentrée associée (38), ainsi qu'un siège sphérique (46) monté sur ladite tête sphérique (48) et supporté par ladite traverse (18).

5. Véhicule selon la revendication 4, **caractérisé en ce que** chaque corps cylindrique (30) en question est relié audit coussinet relatif (4) dans une position axiale fixe le long du deuxième axe d'articulation (17) en question ; et **en ce que** chaque tête sphérique (48) en question est reliée à ladite partie excentrée relative (38) de manière à coulisser dans des directions opposées le long du deuxième axe d'articulation (17).

6. Véhicule selon la revendication 4, **caractérisé en ce que** chaque tête sphérique (48) est entièrement reliée à ladite partie excentrée (38) ; et **en ce que** chaque corps cylindrique (30) comporte des moyens de coulissement (36, 37) associés aux moyens de guidage (15, 16) supportés par ledit coussinet relatif (4) et permettant une translation axiale relative de ladite partie excentrée (38) dans des directions opposées le long du deuxième axe d'articulation (17).

7. Véhicule selon l'une quelconque des revendications précédentes, **caractérisé en ce que** chaque corps cylindrique (30) comporte deux parties terminales cylindriques coaxiales (36, 37) disposées sur des côtés axiaux opposés de ladite partie excentrée (38).

8. Véhicule selon la revendication 7, **caractérisé en ce que** les diamètres desdites parties terminales cylindriques coaxiales (36, 37) sont différents.

9. Véhicule selon la revendication 8, **caractérisé en ce que** le diamètre de ladite partie excentrée (38) est compris entre les diamètres desdites parties terminales cylindriques (36, 37).

10. Véhicule selon la revendication 9, **caractérisé en ce que** la projection axiale de ladite partie excentrée (38) le long du deuxième axe d'articulation (17) est entièrement limitée par la projection axiale de la partie terminale cylindrique (36, 37) ayant le plus grand diamètre, ce qui facilite le montage du corps cylindrique (30) sur les sièges associés (15, 16).

11. Véhicule selon l'une quelconque des revendications précédentes, **caractérisé en ce que** lesdits premiers moyens de raccordement (9) permettent à chaque coussinet (4) d'osciller, par rapport à ladite ossature (2), autour d'au moins un axe coupant ledit premier axe d'articulation (10).

12. Véhicule selon l'une quelconque des revendications précédentes, **caractérisé en ce que** la différence entre deux valeurs données (L1, L2) est égale au double de l'excentricité de ladite partie excentrée (38).

13. Véhicule selon l'une quelconque des revendications précédentes, **caractérisé en ce que** les moyens de compensation (30) peuvent être utilisés pour compenser toute différence de trajectoire entre les coussinets de chenille (4) et la traverse de raccordement (18) dans trois plans orthogonaux au-dessus desdits coussinets (4) qui oscillent autour du premier axe d'articulation (10).
